# EUROPÄISCHE PATENTANMELDUNG

(11) **EP 3 159 316 A1**
(43) Veröffentlichungstag der Anmeldung: **26.04.2017**
(21) Anmeldenummer: 16002263.8
(22) Anmeldetag: 24.10.2016
(51) Int. Cl.: C03C 4/12, C03C 17/32, C09D 5/22

(54) **GLASPRODUKT, VERFAHREN ZUM HERSTELLEN EINES LACKIERTEN GLASPRODUKTS SOWIE LACKMATERIAL ZUM AUFBRINGEN AUF EIN GLASPRODUKT**

(30) Priorität: 23.10.2015 DE 102015013675
(71) Anmelder: J.W. Ostendorf GmbH & Co. KG., 48653 Coesfeld (DE)
(72) Erfinder: Weintz, Hans-Joachim, 48308 Senden (DE)
(74) Vertreter: Rebbereh, Cornelia

(57) **Zusammenfassung**

Bei einem Glasprodukt ist ein Klar- oder Weiß-Glasprodukt mit zumindest einer Schicht aus Lackmaterial versehen, das auf der Oberfläche des Glasprodukts fixiert ist, wobei das Lackmaterial eine reversible Pigmentierung und zumindest einen intrinsisch detektierbaren Lackindikator aufweist.

## Beschreibung

Die Erfindung betrifft ein Glasprodukt, ein Verfahren zum Herstellen eines Glasprodukts sowie ein Lackmaterial zum Aufbringen auf ein Glasprodukt.

Glasprodukte sind seit langem in unterschiedlichster Ausgestaltung im Stand der Technik bekannt. Bei Glasprodukten, wie insbesondere Flaschen aus Glas, ist es üblich, diese entweder zu reinigen und wiederzuverwenden oder diese einzuschmelzen und nachfolgend ein neues Glasprodukt aus diesem zu formen. Dieser Prozess kann nahezu unendlich häufig wiederholt werden, da Glas sich beliebig häufig in den Schmelzprozess zurückführen und zu neuen Glasprodukten verarbeiten lässt. Recycletes Glasmaterial schmilzt bei niedrigeren Temperaturen als die Rohstoffe, die zur Glasherstellung verwendet werden. Daher sinkt bei der Glasherstellung der Energiebedarf, wenn Glasscherben zugeführt werden, insbesondere um etwa 0,2 bis 0,3%, wenn ca. 1% Glasscherben dem Schmelzprozess hinzugefügt werden. Glashersteller verwenden häufig Glasscherben, die als Ausschuss bei der Glasproduktion anfallen und schmelzen diese wieder ein. Die Möglichkeit, Glasscherben für die Herstellung neuer Glasprodukte zu verwenden, hängt allerdings von dem Reinheitsgrad der Glasscherben ab, da beispielsweise durchgefärbtes Glas nicht zur Herstellung von Weißglas verwendet werden kann und ebenfalls Keramikscherben oder Steine den Schmelzprozess von Glasprodukten stören. Um beispielsweise ein Glasprodukt in Form eines weißen Behälterglases herzustellen, ist bei einer Glasscherbenzugabe von 50% eine Farbreinheit der Glasscherben von 99,7% erforderlich. Bei der Herstellung von Braunglasprodukten ist ein Fehlfarbenanteil von maximal 8% gestattet, bei Grünglasprodukten einem Fehlfarbenanteil von bis zu 15%. Dementsprechend hat Weißglas den höchsten Wert, wobei ein Werterhalt möglich ist, wenn das Glas auf Weißglas- bzw. Klarglasniveau gehalten werden kann. Dementsprechend ist es äußerst wichtig, Altglas sorgfältig auf das Glasrecycling vorzubereiten. Hierbei kommt das mit Fremdstoffen verunreinigte bzw. noch versetzte Altglas, getrennt nach Bunt- und Weißglas, zu einer Sortieranlage. Dort werden zunächst eisenhaltige Fremdstoffe üblicherweise durch einen Magnetabscheider erfasst und aussortiert. Entlang von Förderbändern, auf denen das Altglas transportiert wird, werden händisch größere Fremdstoffe aussortiert. In Glasbrechern wird das Altglas nachfolgend auf die für einen Schmelzvorgang erforderliche Scherbengröße von etwa 15mm zerkleinert. Das zerkleinerte Altglas wird auf einer Lochsiebrinne gesiebt, wobei fernkörniges Altglas durch das Sieb fällt und direkt zu einem zweiten Magnetabscheider weitertransportiert wird und Fremdstoffe, die leichter als Glas sind, vor der Lochsiebrinne abgesaugt werden. Das gesiebte Altglas wird durchleuchtet, lichtundurchlässige Fremdstoffe, wie Keramik oder Aluminium, optisch erkannt und ausgeschieden. Nachfolgend erfolgt erneut eine händische Nachsortierung. Über einen dritten Magnetabscheider werden die noch vorhandenen eisenhaltigen Stoffe aus dem zerkleinerten Altglas entfernt und in einer letzten Kontrollstation das Altglas nochmals optisch überprüft.

Der Einsatz von Altglas in der Produktion neuer Glasprodukte verringert den Primärrohstoff- und Energieverbrauch ebenso wie Wasser- und Luftbelastung deutlich, wobei der Bedarf an Schmelzenergie beispielsweise um bis zu 3% je 10% Altglasscherbeneinsatz sinkt.

Zum Färben von Glas können verschiedene Metallverbindungen oder seltene Erden Grundglasschmelzen zugesetzt werden. Durch Zusatz solcher färbender Metallionen können unterschiedlichste Farbtöne erzielt werden. Das Glasmaterial wird hierbei üblicherweise in dem entsprechenden Farbton durchgefärbt. Bekannt ist es jedoch ebenfalls, nachträglich farbloses Glasmaterials bzw. farblose Glasprodukte an der Oberfläche bei 400 - 600°C durch Farbbeizen gelb bis rotbraun zu färben. Solche Farbbeizen basieren üblicherweise auf Silber- oder Kupferverbindungen und werden mit Kaolin oder Ocker gemischt und, als Flüssigkeit angerührt, auf das kalte Glasprodukt oder Glasmaterial aufgetragen. Durch Erhitzen des so vorbereiteten Glasmaterials bzw. Glasprodukts auf die Transformationstemperatur erfolgt ein Ionenaustausch zwischen dem Alkali des Glasmaterials und den Silber- bzw. Kupferionen der Farbbeize.

Es wäre wünschenswert, eine Möglichkeit zu schaffen, die beim Glasrecycling die Sortierung des Altglases erleichtert und bei der zugleich ressourcenschonend ein sehr hoher Altglasanteil wiederverwendet werden kann, der auf Weißglas- bzw.

Klarglasniveau ist, somit sowohl für die Weißglas- bzw. Klarglasherstellung verwendet werden kann als auch grundsätzlich auch für die Buntglasherstellung.

Der vorliegenden Erfindung liegt daher die Aufgabe zugrunde, ein Glasprodukt sowie ein Verfahren zum Herstellen eines solchen Glasprodukts vorzusehen, das ein ressourcenschonendes Recycling und hierdurch eine Förderung der Kreislaufwirtschaft von Glasprodukten und Glasmaterialien ermöglicht.

Die Aufgabe wird für ein Glasprodukt nach dem Oberbegriff des Anspruchs 1 dadurch gelöst, dass ein Klar- oder Weißglasprodukt mit zumindest einer Schicht aus Lackmaterial versehen ist, das auf der Oberfläche des Glasproduktes fixiert ist, wobei das Lackmaterial eine reversible Pigmentierung und zumindest einen intrinsisch detektierbaren Lackindikator aufweist. Für ein Verfahren zum Herstellen eines solchen Glasproduktes wird die Aufgabe dadurch gelöst, dass ein Klar- oder Weißglasprodukt mit zumindest einer Schicht eines Lackmaterials, umfassend eine reversible Pigmentierung und zumindest einen intrinsisch detektierbaren Lackindikator, auf seiner Oberfläche zumindest teilweise beschichtet und das Lackmaterial thermisch fixiert wird. Für Lackmaterial zum Aufbringen auf ein Glasprodukt wird die Aufgabe dadurch gelöst, dass das Lackmaterial thermisch entfernbare Pigmente und zumindest einen intrinsisch detektierbaren Lackindikator umfasst. Weiterbildungen der Erfindung sind in den abhängigen Ansprüchen definiert.

Dadurch wird ein Glasprodukt geschaffen, das nicht aus durchgefärbtem Glasmaterial oder mit Glasbeize außen versehenem Glasmaterial besteht, sondern basiernd auf einem Klar- oder Weißglasprodukt mit zumindest einer außenseitig aufgetragenen Lackschicht versehen ist. Das lackierte Glasprodukt kann daher im späteren Recyclingprozess auf Klar- bzw. Weißglasniveau zurückgeführt werden durch Entfernen des Lackmaterials oder zumindest der Pigmente in diesem von der Glasproduktoberfläche. Hierdurch ist ein energieeffizientes und ressourcenschonendes Recycling der Glasprodukte möglich. Das Lackmaterial der zumindest einen Lackschicht weist eine reversible Pigmentierung auf, die sich also wieder entfernen lässt. Durch die Pigmentierung kann ein farbiges Glasprodukt geschaffen werden und/oder eine Mattierung und/oder andere optische oder haptische Oberflächeneffekte, die insbesondere auch farblos sein kann/können, vorgesehen werden. Das Lackmaterial weist andererseits einen intrinsisch detektierbaren Lackindikator auf, der durch ein Detektionsverfahren festgestellt werden kann. Durch den Lackindikator kann festgestellt werden, dass es sich um lackiertes Glasmaterial handelt und nicht um mit einer Glasbeize gebeiztes bzw. versehenes Glasmaterial oder durchgefärbtes Glasmaterial. Hierdurch kann lackiertes Glasmaterial durch das Detektionsverfahren erkannt, von mit Glasbeize versehenem und von durchgefärbtem Glasmaterial beim Glasrecycling getrennt und separat aufbereitet werden. Das sich nach dem Zerkleinern eines lackierten Glasprodukts ergebende lackierte Glasmaterial in Form von Glasscherben kann im Rahmen eines optischen Detektionsverfahrens aufgrund des intrinsisch detektierbaren Lackindikators erkannt werden. Insbesondere ist eine optische Detektion bei einem Beleuchten eines Vorhangs von herabfallenden Glasscherben möglich. Eine Detektion des lackierten Glasmaterials kann dabei insbesondere über ein Erkennen der von dem Lackmaterial bzw. der darin enthaltenen Pigmente ausgesandten Wellenlänge ermöglicht werden. Die Wellenlänge des von lackiertem Glasmaterial ausgesandten oder reflektierten Lichts kann vorbestimmt werden und unterscheidet sich dabei von der jeweiligen Wellenlänge von durchgefärbtem Glasmaterial oder mit Glasbeize gefärbtem Glasmaterial, so dass ein Erkennen und Trennen des lackierten Glasmaterials von dem nicht lackierten Glasmaterial möglich ist.

Das Lackmaterial wird für die Herstellung des lackierten Glasprodukts auf das Klar- oder Weißglasprodukt aufgetragen und darauf thermisch fixiert. Vorteilhaft kann das Lackmaterial bzw. zumindest die Pigmentierung beim Wiedereinschmelzen des Glasprodukts vollständig entfernt werden, löst sich beim Erhitzen des Glasmaterials während des Schmelzvorgangs desselben vorzugsweise vollständig wieder auf.

Die zumindest eine Schicht des Lackmaterials kann beispielsweise durch Aufspritzen auf die Oberfläche des Glasprodukts, Gießen oder Tauchen des Glasprodukts aufgebracht werden. Zum Fixieren kann das Lackmaterial nachfolgend eingebrannt werden. Zum Härten kann beispielsweise eine energiereiche Strahlung, wie Mikrowellenstrahlung, UV-Strahlung oder Elektronenstrahlen, verwendet werden. Durch ein solches Einbrennen bzw. durch eine solche energiereiche Strahlung lässt sich das Lackmaterial auf der Oberfläche eines Klar- oder Weißglasproduktes fixieren. Die transparenten Eigenschaften des Glasproduktes können dabei erhalten bleiben oder gezielt insbesondere partiell, nicht erhalten bleiben wenn dies gewünscht ist. Beim Wiederaufschmelzen des Glasproduktes, insbesondere nach dessen Zerkleinern in Glasscherben, verbrennt das Lackmaterial vollständig, so dass sich nachfolgend ein Klar- bzw. Weißglasmaterial ergibt, das vielfältig wieder in den Glasproduktionsprozess eingeführt werden kann.

Das Lackmaterial ist vorteilhaft eine Einbrennlack-Formulierung auf Basis einer Polyurethan-Dispersion mit funktionellen OH-Gruppen, einem blockierten Polyisocyanat und Melaminharz. Weiter vorteilhaft ist der Lackindikator feinverteilt in dem Lackmaterial vorgesehen. Hierdurch ist es möglich, auch kleinste Glasscherben ohne weiteres anhand des Lackindikators als lackiertes Glasmaterial zu erkennen. Dementsprechend ist es möglich, auch kleinste Glasscherben lackierten Lackmaterials von anderen Glasscherben von entweder durchgefärbtem Glasmaterial oder mit Glasbeize versehenem Glasmaterial zu trennen. Ein Trennen kann beispielsweise bei Herabfallenlassen eines Vorhangs aus Glasscherben durch Herausschießen mittels eines Luftstrahls erfolgen. Nach insbesondere optischer Detektion des mit dem Lackmaterial lackierten Glasmaterials können die entsprechenden Glasscherben durch Luftstoß aus dem Vorhang herausgetrennt werden.

Ohne weitere Sortierung ist nachfolgend ein Wiedererzeugen von Klar- oder Weißglasmaterial durch das Einschmelzen herausgetrennten lackierten Glasmaterials durch entsprechendes thermisches Behandeln möglich. Durch den Lackindikator ist somit ein Heraussortieren lackierten Lackmaterials aus einem Gemisch unterschiedlichsten Glasmaterials möglich. Durch das Vorsehen einer reversiblen Pigmentierung lassen sich die Pigmente des Lackmaterials und/oder das gesamte Lackmaterial durch Erhitzen insbesondere beim Wiedereinschmelzen des lackierten Glasmaterials vollständig entfernen.

Die zumindest eine Schicht des Lackmaterials kann je nach Wahl der Pigmentierung zu einem farbigen Lackieren des Glasmaterials verwendet werden, wobei eine freie Farbwahl durch entsprechend geeignete Wahl der Pigmente und/oder Farbstoffe möglich ist. Andererseits ist es ebenfalls möglich, durch Aufbringen des Lackmaterials insbesondere unterschiedliche Mattierungen des Glasmaterials zu erzeugen und/oder unterschiedliche Oberflächeneffekte von diesem. Auch dies ist gezielt durch Beifügen unterschiedlicher Pigmente in das Lackmaterial möglich. Das lackierte Glasprodukt kann dementsprechend z.B. transparent und/oder opak ausgebildet werden, je nach Wahl der Pigmentierung des Lackmaterials und ggf. durch lediglich partielles Auftragen des Lackmaterials in eine oder mehrere Schichten. Die Pigmente sind vorteilhaft organische Pigmente, die bei Erhitzen farblos wegbrennen. Auch der Lackindikator kann beim thermischen Behandeln des lackierten Glasmaterials vorteilhaft wieder entfernt werden, so dass das verbleibende Klar- oder Weißglasmaterial als neutrales Material für die Wiederverarbeitung, also die Produktion neuer Glasprodukte zur Verfügung steht.

Als Pigmente und Farbstoffe werden vorteilhaft organische Pigmente und Farbstoffe, die bei den hohen Temperaturen der Glasschmelze rückstandsfrei verbrennen, sowie Mischungen dieser Stoffe zur Erzielung unterschiedlicher Farbtöne verwendet. Dies können insbesondere Azo-Farbstoffe und -Pigmente, Anilin-/Indanthren-Farbstoffe und -Pigmente, Phthalocyanine, DPP-Rotpigmente, Farbruß sein. Je nach gewünschtem Farbton und gewünschter Deckkraft können die Einsatzkonzentrationen im Bereich von 0,1 bis 15 Massenprozent, bevorzugt 1 bis 9 Massenprozent, liegen.

Als Lackindikator oder Marker können insbesondere polyaromatische und heteroaromatische Verbindungen, bevorzugt mit hohen molaren Extinktionskoeffizienten, die bei den Temperaturen der Glasschmelze rückstandsfrei verbrennen, verwendet werden. Die Wahl des Lackindikators bzw. Markers ist abhängig von der Frequenz des eingestrahlten Lichts des Detektors. Beide werden vorteilhaft aufeinander abgestimmt. Beispiele von Fluoreszenzmarkern mit Extinktionskoeffizienten im sichtbaren und nicht sichtbaren Frequenzbereich sind Alexa Fluor Dyes 350 - 790 und Derivate, Fluorescein und seine Derivate, z.B. Fluoresceinisothiocyanat (FITC), Coumarin und Derivate, ATTO 520 - 740 und Derivate, Rhodamine Red und DY-405, DY-682 mit Derivaten. Die Einsatzkonzentrationen können bei 0,1 bis 50 mg/kg, bevorzugt 0,5 bis 2 mg/kg, liegen.

Es kann somit ein lackiertes Glasmaterial erzeugt werden, das in Formgebung, Farbe und Haptik aufgrund des Lackierens beliebig anwendungsspezifisch variiert werden kann, so dass nicht nur eine ressourcenschonende Wiederverarbeitung eines zum Recycling vorgesehenen Glasprodukts möglich ist, sondern auch jedes beliebige Glasprodukt hergestellt und mit einer gewünschten Farbgebung und/oder Haptik versehen werden kann.

Zur näheren Erläuterung der Erfindung wird nachfolgend ein Ausführungsbeispiel von dieser näher beschrieben.

Zur Herstellung eines lackierten Glasprodukts wird beispielsweise ein Klarglas-oder Weißglasprodukt mit zumindest einer Schicht eines Lackmaterials durch Aufsprühen versehen. Das Lackmaterial besteht aus einer Einbrennlack-Formulierung auf Basis einer Polyurethan-Dispersion mit funktionellen OH-Gruppen, einem blockierten Polyisocyanat und Melaminharz, dem Pigmente beigegeben sind und in das ein Lackindikator feinstverteilt eingemischt wird. Die Pigmente sind organische Pigmente und können Farbpigmente und/oder eine Mattierung bewirkende Pigmente und/oder eine andere Art eines Oberflächeneffektes bewirkende Pigmente sein. Der Lackindikator ist intrinsisch detektierbar. Die von diesem bei Beleuchten ausgesandte Wellenlänge des reflektierten Lichts ist vorbestimmt und daher als Indikator für das Feststellen, dass es sich um dieses Lackmaterial handelt, geeignet. Nach dem Auftragen des Lackmaterials auf das Klar- oder Weißglasprodukt wird dieses thermisch behandelt bei einer Temperatur von 400-600°C, um das Lackmaterial auf der Oberfläche des Glasprodukts einzubrennen. Alternativ ist ebenfalls eine Fixierung des Lackmaterials unter Verwendung z.B. einer Mikrowellenstrahlung geeigneter Frequenz, von Elektronenstrahlen, UV-Strahlung oder einer anderen energiereichen Strahlung möglich.

Für einen späteren Recyclingprozess wird das Lackmaterial bzw. werden dessen organische Pigmente beim Einschmelzen des lackierten und zerkleinerten Glasmaterials weggebrannt, so dass wieder ein farbloses bzw. weißes Glasmaterial für die Weiterverarbeitung zur Verfügung steht.

### Beispiele für verwendbare organische Pigmente sind:

für den Farbton Violett: Dioxazinviolett (C.I. Pigment Violet 23), das ein hochwertiges organisches Pigment ist;
für den Farbton Blau: Berliner Blau (C.I. Pigment Blue 27), auch Preußischblau, Pariser Blau, Turnbulls Blau oder Miloriblau genannt, das ein lichtechtes Pigment von höchster Farbstärke ist, Indanthronblau oder Indanthren (C.I. Pigment Blue 60), ein aus Anthrachinon hergestelltes organisches Pigment, Indigo als Bestandteil im Maya-Blau und Phthalocyaninblau oder Heliogenblau (C.I. Pigment Blue 15), das sich besonders für lasierende Farben eignet;
für den Farbton Türkis: Phthalocyanintürkis bzw. Phthalocyanin (PB16) oder eine Mischung aus Phthalocyaninblau (PB15:3) und Phthalocyaningrün (PG7);
für den Farbton Gelb: die Gruppe der Azopigmente deckt den unteren bis mittleren Echtheitsgrad ab, die Gruppe der Benzimidazolone umfasst sehr hochbeständige Pigmente, hochwertige Pigmente sind Küpenpigmente. Beispielhaft können Arylidgelb, Benzimidazolone (z.B. C.I. Pigment Yellow 154), eine Untergruppe der Azopigmente, die polyzyklische Molekülteile enthalten, Brillantgelb (C.I. Pigment Yellow 151), Diarylgelb, Flavanthron, Hansagelb, Permanentgelb, erhältlich von der Firma Clariant AG, Indischgelb, Indolinone und Isoindolinone, eine Gruppe hochechter organischer Gelbpigmente (z.B. C.I. Pigment Yellow 109, 110 und 139), Kasseler Gelb und Schellack verwendet werden, Perinon in der trans-Form (C.I. Pigment Orange 43), ein koloristisch sehr reines Orangepigment.

Für den Farbton Rot können Azo- und Küpenrots sowie Chinacridone, DPP-Pigmente und Perylene verwendet werden. Beispielhaft können Chinacridone (C.I. Pigment Red 122, C.I. Pigment Violet 19), hochbeständige polyzyklische Pigmente, Dibromanthanthron (C.I. Pigment Red 168), Diketo-Pyrrolo-Pyrrol-Pigmente (DPPs) (C.I. Pigment Orange 73, C.I. Pigment Red 254, 255 und 264), hochbeständige polyzyklische Pigmente, Drachenblut, Karminrot (Cochenille), Kermeslack, Alizarin, Lycopin, MePTCDI, auch Perylenrot (C.I. Pigment Red 179), ein hochbeständiges organisches Perylen-Pigment mit Rubin-Farbstich, PTCDA (C.I. Pigment Red 224), Realgar oder Rotholzlack (Brazil) verwendet werden. Für den Farbton Braun können Bister, Sepia, Umbra (C.I. Pigment Brown 6), wie Umbra gebrannt, verwendet werden.

Für den Farbton Schwarz kann Ruß (Industrieruß, Carbon Black) verwendet werden, der aus reinem Kohlenstoff besteht und durch Verbrennen organischer Stoffe wie Öl, Erdgas usw. unter Sauerstoffmangel erzeugt wird. Die verschiedenen Rußtypen unterscheiden sich in ihrer Teilchengröße und Oberfläche, aber auch im Farbstich. Beispielhaft sind Anilinschwarz (C.I. Pigment Black 1), Beinschwarz, Graphit, Kernschwarz, Holzkohlenschwarz, das im Vergleich zu tierischen Verkohlungsprodukten mit deren Fettrußen einen dunkelanthrazitfarbenen Ton aufweist und bei Weißausmischungen eher zu einem leichten Blaustich neigt, und Ruß (C.I. Pigment Black 7 und 6 Lamp Black) verwendbar.

### Beispiele für organische Farbstoffe sind:

Alizarinviolett, ein synthetischer organischer Farbstoff.
Weitere Beispiele sind Kristallviolett, ein Triphenylmethanfarbstoff, Mauvein, ein basischer Azinfarbstoff in der namensgebenden Farbe mauve, der Pflanzenfarbstoff Indigo aus der indischen Indigopflanze oder dem einheimischen Färberwaid, Techelet, ein Meeresblau, Prozesscyan, das in ISO 2846 genormte Cyan, der echte Purpur, ein organischer Farbstoff aus Meeresschnecken, Indischgelb, ein orangestichiger Gelbton, entweder als ein Magnesium- und Calciumsalz der Euxanthinsäure oder als Azofarbstoff (PY1), Safran, dessen färbender Bestandteil der Farbstoff Crocetin ist, Solidgelb, ein Teerfarbstoff, Pyranthronorange, ein synthetischer organischer Farbstoff mit ausgezeichneter Lichtechtheit und guter Stabilität, der im Gegensatz zu der Mehrzahl organischer Pigmente nicht lasierend, sondern halbdeckend ist, so dass er als Ersatz für Kadmiumorange in Frage kommt, Dibromanthanthron (Vat Orange 3), ein orange-roter, synthetischer organischer Küpenfarbstoff, der rote Pflanzenfarbstoff Chica, der aus den Blättern des brasilianischen Bignoniengewächses Arrabidaea chica gewonnen wird, der Steinkohlenteerfarbstoff Eosin, das echte Karminrot oder Karmesin, ein organischer Farbstoff, der aus Schildläusen gewonnen wird, das relativ preiswerte Naphtholrot und das Anilinschwarz.

Das Lackmaterial weist andererseits den intrinsisch detektierbaren Lackindikator auf, der durch ein Detektionsverfahren festgestellt werden kann. Durch den Lackindikator kann festgestellt werden, dass es sich um lackiertes Glasmaterial handelt und nicht um mit einer Glasbeize gebeiztes bzw. versehenes Glasmaterial oder durchgefärbtes Glasmaterial. Die Wahl des Lackindikators bzw. Markers ist abhängig von der Frequenz des eingestrahlten Lichtes des Detektors. Beide sind aufeinander abgestimmt. Beispiele für verwendbare, intrinsisch detektierbare Lackindikatoren sind folgende Fluoreszenzmarker mit Extinktionskoeffizienten im sichtbaren und nicht sichtbaren Frequenzbereich, von denen einer oder auch mehrere in Kombination miteinander verwendet werden können, insbesondere in Einsatzkonzentrationen im Bereich von 0,1 bis 50 mg/kg, besonders bevorzugt 0,5 bis 2 mg/kg:
- Alexa Fluor^{®} 350 [Alexa350] (der Firma Molecular Probes), alternativ AMCA (Aminomethylcoumarin-Acetat);
- DY-415 [DY415] (der Firma Dyomics GmbH), alternativ Coumarin (DEAC);
- ATTO 425 [ATTO425] (der Firma ATTO-TEC GmbH), alternativ Alexa Fluor^{®} 425;
- ATTO 465 [ATTO465] (der Firma ATTO-TEC GmbH), alternativ LC 480 (Lightcycler^{®} 480) Cyan 500 (der Firma Roche Diagnostics);
- Bodipy FL [BOFL] (der Firma Molecular Probes);
- Alexa Fluor^{®} 488 [Alexa488] (der Firma Molecular Probes), alternativ CY2 (Cyanin-Farbstoff der Firma Jackson ImmunoResearch Inc.), DY-495 oder ATTO 495;
- FAM [FAM], Phosphoramidit-Derivat des 6-Carboxyfluorescein, alternativ CY2, DY-495 oder ATTO 495;
- Fluorescein Isothiocyanat [FITC], alternativ CY2, DY-495 oder ATTO 495;
- Fluorescein [FLU], alternativ DY-495 oder ATTO 495;
- Fluorescein-dT [FLUdT], alternativ DY-495 oder ATTO 495;
- ATTO 488 [ATTO488] (der Firma ATTO-TEC GmbH), alternativ CY2;
- Oregon Green 488 [OG488] (der Firma Molecular Probes), alternativ CY2;
- Oregon Green 514 [OG514] (der Firma Molecular Probes), alternativ CY2;
- Rhodamine Green [RGR] (der Firma Molecular Probes), alternativ CY2;
- TET [5-Tetrachloro-Fluorescein], alternativ CAL Fluor^{®} Gold 540 (der Firma LGC Biosearch Technologies);
- ATTO 520 [ATTO520] (der Firma ATTO-TEC GmbH), alternativ CAL Fluor^{®} Gold 540 oder Rhodamine 6G;
- JOE [wobei 6-JOE ein 6-Carboxy-4',5'-Dichloro-2',7'-Dimethoxyfluorescein ist], alternativ CAL Fluor^{®} Gold 540 oder Rhodamine 6G;
- Yakima Yellow [YAKYE] (der Firma Epoch Biosciences, Inc.), alternativ VIC^{®} oder CAL Fluor^{®} 560;
- Bodipy 530/550 [BO530] (der Firma Molecular Probes), alternativ VIC^{®} oder CAL Fluor^{®} 560;
- HEX [Hexachloro-Fluorescein], alternativ VIC^{®}, CAL Fluor^{®} 560 oder SIMA;
- Alexa Fluor^{®} 555 [ALEXA555] (der Firma Molecular Probes), alternativ CY3, TRITC & TMR oder Alexa Fluor 546;
- DY-549 [DY549] (der Firma Dyomics GmbH), alternativ Quasar^{®} 570 (der Firma LGC Biosearch Technologies) oder Dragonfly Orange;
- Bodipy TMR-X [BOTMRX] (der Firma Molecular Probes), alternativ Quasar^{®} 570 oder Dragonfly Orange;
- Cyanine3 [CY3], ein Fluorezenzfarbstoff der Cyanin-Phosphoramidit-Familie, alternativ Quasar^{®} 570, Dragonfly Orange oder TYE™ 563;
- ATTO 550 [ATTO550] (der Firma ATTO-TEC GmbH), alternativ NED™, CY3, Rhodamine B oder Rhodamine 6G;
- TAMRA [TAM, Carboxy-Tetramethyl-Rhodamine] (der Firma Applied Biosystems), alternativ Rhodamine 6G oder Rhodamine B;
- Rhodamine Red [RRE] (der Firma Molecular Probes), alternativ Rhodamine 6G oder Rhodamine B;
- ATTO 565 [ATTO565] (der Firma ATTO-TEC GmbH), alternativ PET^{®} oder Alexa Fluor^{®} 594;
- ROX [Carboxy-X-Rhodamin] (der Firma Applied Biosystems), alternativ Texas Red oder Alexa Fluor^{®} 594;
- Texas Red [TxRed] (der Firma Molecular Probes), alternativ ROX™ oder Alexa Fluor^{®} 594;
- Cyanine3.5 [CY35, wobei Cyanine3.5 ein Fluoreszenzfarbstoff der Cyanin-Phosphoramidit-Familie ist], alternativ Alexa Fluor^{®} 594 oder CAL Fluor^{®} Red 610;
- Lightcycler 610 [LC610] (der Firma Roche Diagnostics GmbH), alternativ Alexa Fluor^{®} 594 oder CAL Fluor^{®} Red 610;
- ATTO 594 [ATTO594] (der Firma ATTO-TEC GmbH), alternativ Alexa Fluor^{®} 594 oder CAL Fluor^{®} Red 610;
- DY-480 XL [DY480] (der Firma Dyomics GmbH);
- DY-61 0 [DY610] der Firma Dyomics GmbH), alternativ Alexa Fluor^{®} 610;
- ATTO 610 [ATTO610] (der Firma ATTO-TEC GmbH), alternativ Alexa Fluor^{®} 610;
- Lightcycler 640 [LC640] (der Firma Roche Diagnostics GmbH), ein NHS-Ester;
- Bodipy 630/650 [BO630] (der Firma Molecular Probes), alternativ Alexa Fluor^{®} 633;
- ATTO 633 [ATTO633] (der Firma ATTO-TEC GmbH), alternativ LIZ^{®} oder Alexa Fluor^{®} 633;
- Alexa Fluor^{®} 647 [Alexa647] (der Firma Molecular Probes), alternativ CY5 oder Quasar^{®} 670;
- Bodipy 650/665 [BO650] (der Firma Molecular Probes), alternativ CY5 oder Quasar^{®} 670;
- ATTO 647N [ATTO647N] (der Firma ATTO-TEC GmbH), alternativ CY5 oder Quasar^{®} 670;
- Cyanine5 [CY5] (Cyanine5 ist ein Fluoreszenzfarbstoff der Cyanin-Phosphoramidit-Familie), alternativ Quasar^{®} 670 oder TYE™ 655;
- DY-649 [DY649] (der Firma Dyomics GmbH), alternativ Quasar^{®} 670;
- Cyanine5.5 [CY55] (Cyanine5.5 ist ein Fluoreszenzfarbstoff der Cyanin-Phosphoramidit-Familie), alternativ Alexa Fluor^{®} 680 oder TYE™ 705;
- ATTO 680 [ATTO680] (der Firma ATTO-TEC GmbH), alternativ Alexa Fluor^{®} 680 oder Alexa Fluor^{®} 700;
- DY-682 [DY682] (der Firma Dyomics GmbH), alternativ IRDye 700 (ein Infrarot- oder Nahe-Infrarot (NIR)-Farbstoff) oder Quasar^{®} 705;
- ATTO 700 [ATTO700] (der Firma ATTO-TEC GmbH), alternativ IRDye 700 oder Quasar^{®} 705;
- ATTO 740 [ATTO740] (der Firma ATTO-TEC GmbH), alternativ CY7 oder Alexa Fluor^{®} 740;
- DY-782 [DY782] (der Firma Dyomics GmbH), alternative IRDye 800.

Die Emissionswerte der vorstehenden beispielhaft verwendbaren Fluoreszenzfarbstoffe reichen von einer Wellenlänge von 442 nm beim Alexa Fluor® 350 bis zu einer Wellenlänge von 800 nm beim DY-782. Die Absorptionswerte liegen bei Werten von 346 nm beim Alexa Fluor® 350 und von 782 nm beim DY-782. Die Extinktionskoeffizienten reichen von Werten von 19.000 M⁻¹cm⁻¹ beim Alexa Fluor® 350 bis zu Werten von 250.000 M⁻¹cm⁻¹ beim Cyanine5 bzw. DY-649 bzw. Cyanine5.5.

Neben den vorstehend beschriebenen Ausführungsvarianten von Glasprodukten und Verfahren zu deren Herstellung können noch zahlreiche weitere vorgesehen werden, insbesondere auch beliebige Kombinationen der vorstehend genannten Merkmale von diesen, bei denen jeweils ein Klar- oder Weiß-Glasprodukt mit zumindest einer Schicht aus Lackmaterial versehen ist, das auf der Oberfläche des Glasprodukts fixiert ist bzw. auf seiner Oberfläche zumindest teilweise entsprechend mit Lackmaterial beschichtet und das Lackmaterial thermisch fixiert wird/ist, wobei das Lackmaterial eine reversible Pigmentierung und zumindest einen intrinsisch detektierbaren Lackindikator aufweist.

## Patentansprüche

1. Glasprodukt,
**dadurch gekennzeichnet, dass**
ein Klar- oder Weiß-Glasprodukt mit zumindest einer Schicht aus Lackmaterial versehen ist, das auf der Oberfläche des Glasprodukts fixiert ist, wobei das Lackmaterial eine reversible Pigmentierung und zumindest einen intrinsisch detektierbaren Lackindikator aufweist.

2. Glasprodukt nach Anspruch 1,
**dadurch gekennzeichnet, dass**
der Lackindikator optisch und/oder durch Ermitteln der von dem Lackmaterial ausgesandten Wellenlänge detektierbar ist.

3. Glasprodukt nach Anspruch 1 oder 2,
**dadurch gekennzeichnet, dass**
das Lackmaterial eine Einbrennlack-Formulierung auf Basis einer Polyurethan-Dispersion mit funktionellen OH-Gruppen, einem blockierten Polyisocyanat und Melaminharz ist.

4. Glasprodukt nach einem der vorstehenden Ansprüche,
**dadurch gekennzeichnet, dass**
der Lackindikator fein verteilt in dem Lackmaterial vorgesehen ist.

5. Glasprodukt nach einem der vorstehenden Ansprüche,
**dadurch gekennzeichnet, dass**
das lackierte Glasprodukt transparent oder opak ist.

6. Glasprodukt nach einem der vorstehenden Ansprüche,
**dadurch gekennzeichnet, dass**
das Lackmaterial durch ein thermisches Verfahren, insbesondere beim Einschmelzen des Glasmaterials entfernbar ist.

7. Verfahren zum Herstellen eines Glasprodukts nach einem der vorstehenden Ansprüche
**dadurch gekennzeichnet, dass**
ein Klar- oder Weiß-Glasprodukt mit zumindest einer Schicht eines Lackmaterials, umfassend eine reversible Pigmentierung und zumindest einen intrinsisch detektierbaren Lackindikator, auf seiner Oberfläche zumindest teilweise beschichtet und das Lackmaterial thermisch fixiert wird.

8. Verfahren nach Anspruch 7,
**dadurch gekennzeichnet, dass**
die zumindest eine Schicht des Lackmaterials auf die Oberfläche des Glasprodukts aufgespritzt oder durch Gießen oder Tauchen aufgebracht wird.

9. Verfahren nach Anspruch 7 oder 8,
**dadurch gekennzeichnet, dass**
das Lackmaterial durch Einbrennen fixiert wird oder durch energiereiche Strahlung.

10. Lackmaterial zum Aufbringen auf ein Glasprodukt,
**dadurch gekennzeichnet, dass**
das Lackmaterial thermisch entfernbare Pigmente und zumindest einen intrinsisch detektierbaren Lackindikator umfasst.
